# FASCICULE DE BREVET EUROPEEN

(11) **EP 1 574 422 B1**
(45) Date de publication et mention de la délivrance du brevet: **11.07.2007**
(21) Numéro de dépôt: 05290346.5
(22) Date de dépôt: 16.02.2005
(51) Int. Cl.: B62D 25/14

(54) **Traverse pour véhicule automobile et véhicule associé**
Querträger eines Fahrzeugs und Fahrzeug mit einem solchen Querträger
Cross beam of a vehicle and vehicle provided therewith

(30) Priorité: 18.02.2004 FR 0401631
(43) Date de publication de la demande: 14.09.2005
(73) Titulaire: Faurecia Interieur Industrie, 92000 Nanterre (FR)
(72) Inventeur: Baudart, Laurent, 60530 Fresnoy en Thelle (FR)
(74) Mandataire: Domenego, Bertrand

(56) Documents cités:
- EP-A- 0 479 630
- DE-A- 19 601 800
- DE-A- 19 728 557
- FR-A- 2 739 602

## Description

La présente invention concerne une traverse pour véhicule automobile selon le preambule de la revendication 1.

FR 2 739 602 décrit une traverse pour véhicule automobile comprenant une poutre et une jambe de force en deux parties.

L'invention s'applique en particulier à une traverse de planche de bord de véhicule.

Les traverses du type précité sont destinées à être montées à l'intérieur de la caisse d'un véhicule automobile. A cet effet, les extrémités latérales de la poutre sont fixées aux montants dits « A » de la caisse et l'extrémité inférieure de la jambe de force est fixée sur le plancher du véhicule.

Pour réaliser ce montage, la traverse est introduite à l'intérieur de la caisse du véhicule par une ouverture de la caisse.

Pour diminuer l'encombrement de la traverse lors de son introduction dans la caisse, la partie mobile de la jambe de force est maintenue dans sa position escamotée par une goupille amovible qui solidarise la partie mobile avec la partie fixe et forme les moyens de retenue.

Une fois la traverse introduite dans le véhicule, la goupille est retirée et la partie mobile de la jambe de force est déplacée vers le plancher du véhicule, puis fixée sur le plancher. Les parties fixe et mobile sont alors fixées entre elles grâce à une vis supplémentaire.

Une telle structure ne donne pas entière satisfaction. En effet, il existe un risque que la goupille de retenue entre la partie fixe et la partie mobile soit abandonnée dans le véhicule après le montage de la traverse sur le plancher.

Un but de l'invention est de résoudre ce problème en fournissant une traverse du type précité qui limite les risques de perte dans le véhicule d'une ou plusieurs pièce(s) des moyens de retenue.

A cet effet, l'invention a pour objet une traverse selon la revendication 1.

Suivant des modes particuliers de réalisation, la traverse peut comprendre l'une ou plusieurs des caractéristiques suivantes, qui font l'objet des revendications 2 à 11.

L'invention a également pour objet un véhicule automobile, selon la revendication 1.

Selon une variante, le véhicule peut comprendre :
- au moins deux montants et des premiers moyens de fixation de la poutre aux montants ;
- au moins un plancher et des deuxièmes moyens de fixation de la partie mobile au plancher.

L'invention a en outre pour objet un procédé de montage selon la revendication 14.

L'invention sera mieux comprise à la lecture de la description qui va suivre, donnée uniquement à titre d'exemple, et faite en se référant aux dessins annexés sur lesquels :
- la Figure 1 est une vue schématique partielle en coupe transversale de la caisse d'un véhicule muni d'une traverse de planche de bord selon l'invention, la partie mobile étant en position déployée ;
- la Figure 2 est une vue d'un détail de la traverse de la Figure 1, prise suivant la flèche Il de la Figure 1;
- la Figure 3 est une vue latérale d'un détail de la Figure 2, prise en coupe suivant la ligne III-III de la Figure 2 ;
- la Figure 4 est une vue d'un détail de la Figure 1, la partie mobile étant dans sa position escamotée ;
- la Figure 5 est une vue, prise en coupe suivant la ligne V-V de la Figure 4, d'une variante de la traverse de la Figure 4 ; et
- la Figure 6 est une vue analogue à la Figure 5, la partie mobile étant dans sa position déployée.

Dans tout ce qui suit, les orientations utilisées sont les orientations habituelles d'un véhicule automobile. Ainsi les termes « avant », « arrière », « gauche », « droite », « supérieur » et « inférieur » s'entendent par rapport au sens de marche du véhicule automobile et à la position d'un conducteur.

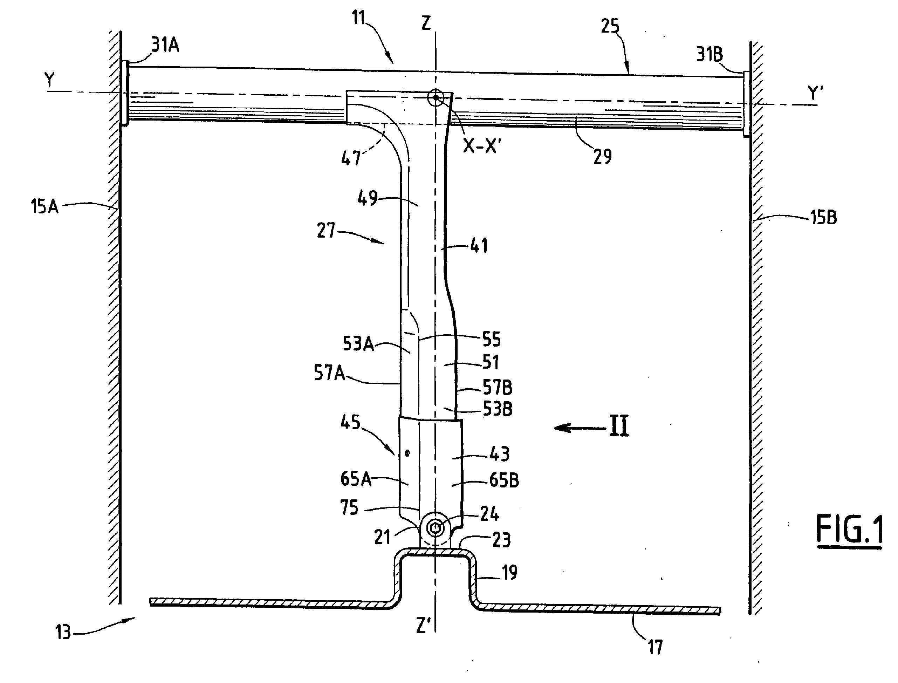

La Figure 1 illustre une traverse 11 de planche de bord pour véhicule automobile, montée sur des éléments 13 de la caisse du véhicule.

Ces éléments 13 comprennent deux montants latéraux 15A et 15B dits montants « A », respectivement à gauche et à droite sur la Figure 1, et un plancher 17.

Le plancher 17 présente dans sa partie médiane un tunnel 19 de section en U renversé. Un organe 21 de fixation fait saillie sur la surface supérieure 23 du tunnel 19. Un passage fileté 24 parallèle à un axe longitudinal X-X' du véhicule est ménagé dans l'organe de fixation 21.

La traverse 11 comprend une poutre 25 et au moins une jambe de force 27 qui fait saillie vers le bas par rapport à la poutre 25.

La poutre 25 comporte un tube 29 et deux flasques de liaison 31A et 31 B aux montants 15A et 15B de la caisse 13, disposés respectivement aux extrémités gauche et droite de la poutre 25.

Comme illustré sur la Figure 1, le tube 29 s'étend suivant un axe Y-Y' sensiblement transversal et horizontal par rapport à l'axe longitudinal X-X' du véhicule automobile. Il présente, par exemple, une section sensiblement circulaire sur toute sa longueur.

Le tube 29 est destiné à supporter des organes de liaison (non-représentés) à des équipements du véhicule, notamment des supports de colonne de direction ou de planche de bord.

Les flasques de fixation 31A et 31B s'étendent suivant un plan perpendiculaire à l'axe transversal Y-Y'. Dans l'exemple illustré sur la Figure 1, les flasques 31A et 31B sont disposés en appui sur les montants 15A et 15B du véhicule et sont fixés sur ces montants 15A et 15B par des vis (non représentées). Ainsi, la poutre 25 est montée solidaire des montants gauche et droit 15A et 15B du véhicule. D'autres modes de liaison des extrémités latérales de la partie 25 peuvent être envisagés.

La jambe de force 27 s'étend suivant un axe Z-Z' sensiblement incliné par rapport à un axe vertical, vers le plancher 17 du véhicule.

Elle comprend une partie fixe 41, une partie mobile 43 montée coulissante sur la partie fixe 41 et des moyens 45 de retenue de la partie mobile 43 par rapport à la partie fixe 41.

La partie fixe 41 est fixée par son extrémité supérieure 47 à une partie intermédiaire de la poutre 25.

La partie fixe 41 comprend une région supérieure 49 de forme sensiblement plane et une région inférieure 51 constituée par un profilé de section transversale en forme de V.

La région inférieure 51 présente deux flancs 53A et 53B, reliés entre eux suivant un bord latéral 55. Chaque flanc 53A, 53B présente par ailleurs un bord extérieur libre 57A, 57B.

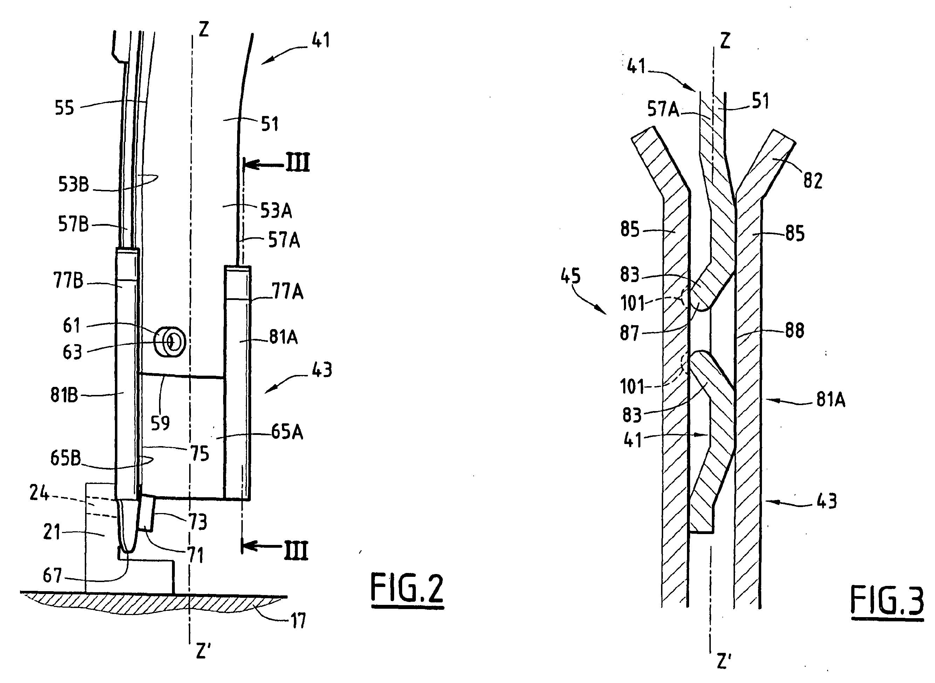

Comme illustré sur la Figure 2, la partie fixe 41 comprend en outre, au voisinage de son extrémité inférieure 59, un premier bossage cylindrique 61, dans lequel est ménagé un premier trou taraudé 63 d'axe orthogonal à l'axe Z-Z'. Ce trou taraudé 63 reçoit une vis de fixation (non représentée) de la partie fixe 41 par rapport à la partie mobile 43 lorsque la traverse 11 est montée dans le véhicule.

La partie mobile 43 comprend un profilé de section transversale en V, de forme sensiblement complémentaire à la région inférieure 51 de la partie fixe 41.

La partie mobile 43 présente deux joues latérales 65A et 65B. Chaque joue 65A, 65B est disposée en appui sur un flanc 53A, 53B en regard de la région inférieure 51 de la partie fixe 41.

Comme illustré sur la Figure 2, la joue 65B, à gauche sur cette Figure, présente au voisinage de son extrémité inférieure 67, un deuxième bossage cylindrique 71 dans lequel est ménagé un deuxième trou taraudé 73. Ce deuxième trou taraudé 73 reçoit une vis de fixation (non représentée) de la partie mobile 43 sur l'organe de fixation 21 du plancher 19 du véhicule lorsque la traverse 11 est montée dans le véhicule.

Les deux joues 65A, 65B de la partie mobile 43 sont reliées entre elles suivant un bord latéral 75. Par ailleurs, chaque joue 65A, 65B de la partie mobile comprend un bord libre 77A, 77B.

La partie mobile 43 est mobile par coulissement le long de l'axe perpendiculaire Z-Z' par rapport à la partie fixe 41, entre une position escamotée dans laquelle la partie mobile 43 est proche de la poutre 25, et une position déployée, dans laquelle la partie mobile 43 est éloignée de la poutre 25.

Comme illustré sur la Figure 3, les moyens 45 de retenue de la partie mobile 43 sur la partie fixe 41 comprennent :
- sur chaque bord libre 77A, 77B de la partie mobile 43, une glissière 81A, 81B, et
- sur chaque bord libre 57A, 57B de la partie fixe 41, au moins une lame élastique 83. Dans l'exemple illustré, les moyens de retenue 45 comprennent deux lames 83 sur chaque bord libre 57A, 57B.

On décrira uniquement la structure de la glissière 81A sur le bord libre 77A de la partie mobile 43. La structure de la glissière 81B est analogue à celle de la glissière 81A. De même, on décrira uniquement la structure des lames 83 sur le bord libre 57A de la partie fixe 41, la structure des lames 83 sur le bord libre 57B de la partie fixe 41 étant analogue à celle des lames 83 sur le bord libre 57A.

Comme illustré par la Figure 3, la glissière 81A est formée par un repli du bord libre 77A parallèlement à l'axe Z-Z'. Le repli est orienté vers l'intérieur du profilé constituant la partie mobile 43.

L'extrémité supérieure 82 de la glissière 81A présente une partie évasée facilitant l'introduction de la partie fixe 41 dans la glissière 81A.

La glissière 81A présente une section transversale en forme de U avec deux parois latérales 85 sensiblement parallèles.

Le bord libre 57A de partie fixe 41 est engagé dans la glissière 81A en regard.

Les lames élastiques 83 sont ménagées sur le bord libre 57A de la partie fixe 41, par emboutissage. Ces lames 83 sont venues de matière avec la partie fixe 41. Comme illustré sur la Figure 3, les lames 83 présentent une extrémité 87 en appui sur une paroi 85 de la glissière 81A en regard.

Par ailleurs, sous l'effet de l'élasticité des lames 83, une face 88 de la région inférieure 51 de la partie fixe 41, à l'opposé des lames 83, s'appuie sur l'autre paroi 85 de la glissière 81A.

Ainsi, la glissière 81A et les lames élastiques 83 comprennent respectivement des régions qui coopèrent par frottement.

Dans l'exemple illustré sur la Figure 3, ces régions coopèrent par frottement, quelle que soit la position de la partie mobile 43 entre sa position escamotée et sa position déployée.

En variante, ces régions peuvent ne coopérer que lorsque la partie mobile 43 est dans sa position escamotée.

Le montage d'une traverse 11 selon l'invention dans la caisse 13 d'un véhicule va maintenant être décrit.

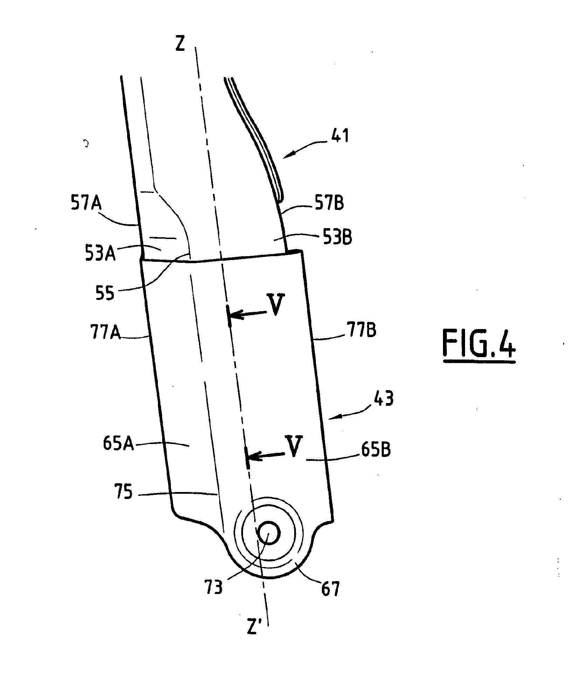

Dans un premier temps, la partie mobile 43 est maintenue dans sa position escamotée, au voisinage de la poutre 25, comme illustré sur la Figure 4. Le frottement entre la partie fixe 41 et la partie mobile 43 obtenu grâce aux lames élastiques 83 maintient la partie mobile 43 dans sa position escamotée. On observera que ce maintien est assuré sans qu'une pièce additionnelle ne soit nécessaire.

La traverse 11 présente ainsi un encombrement minimal.

Dans un deuxième temps, un opérateur ou un robot de montage introduit la traverse 11 dans la caisse via une ouverture et fixe les flasques latéraux 31A, 31B de la poutre 25 sur les montants 15A, 15B en regard.

Dans un troisième temps, l'opérateur déplace par coulissement la partie mobile 43 le long de la partie fixe 41, entre sa position escamotée et sa position déployée, en surmontant la force de frottement entre la partie fixe 41 et la partie mobile 43.

Lors de ce déplacement, l'opérateur peut ajuster la position de la partie mobile 43 en fonction des caractéristiques du véhicule, et notamment de la position de la surface supérieure 23 du tunnel 19 dans le véhicule, sans risque que la partie mobile 43 ne se détache de la partie fixe 41.

Dans la position déployée, le deuxième trou taraudé 73 de la partie mobile 43 est en regard du passage fileté 24 sur l'organe de fixation 21. L'opérateur fixe alors l'extrémité inférieure 67 de la partie mobile 43 sur le tunnel 19 en introduisant une vis dans le deuxième trou taraudé 73 et le passage fileté 24.

Dans un quatrième temps, l'opérateur perce la partie mobile 43 en regard du premier trou taraudé 63 de la partie fixe 41. Puis il introduit une vis (non représentée) dans ce trou taraudé 63 afin de rendre solidaire la partie fixe 41 avec la partie mobile 43.

Dans une première variante, des lames élastiques 83 sont ménagées uniquement suivant un bord libre 57A d'un seul flanc 53A de la partie fixe 41. Le bord libre 57B de l'autre flanc latéral 53B de la partie fixe 41 est alors dépourvu de lame élastique 83. Cette variante simplifie le procédé de fabrication de la partie fixe 41.

Dans une deuxième variante, les lames élastiques 83 sont formées à partir de pièces distinctes de la partie fixe 41, rapportées en saillie sur cette partie fixe 41.

Dans une troisième variante, représentée en pointillés sur la Figure 3, des logements 101 de réception des extrémités 87 des lames élastiques 83 sont ménagés dans une partie supérieure d'une paroi 85 de la glissière 81A, afin de recevoir l'extrémité 87 des lames élastiques 83 lorsque la partie mobile 43 est dans sa position déployée. Le déplacement de la partie mobile 43 au-delà de sa position déployée est ainsi empêché.

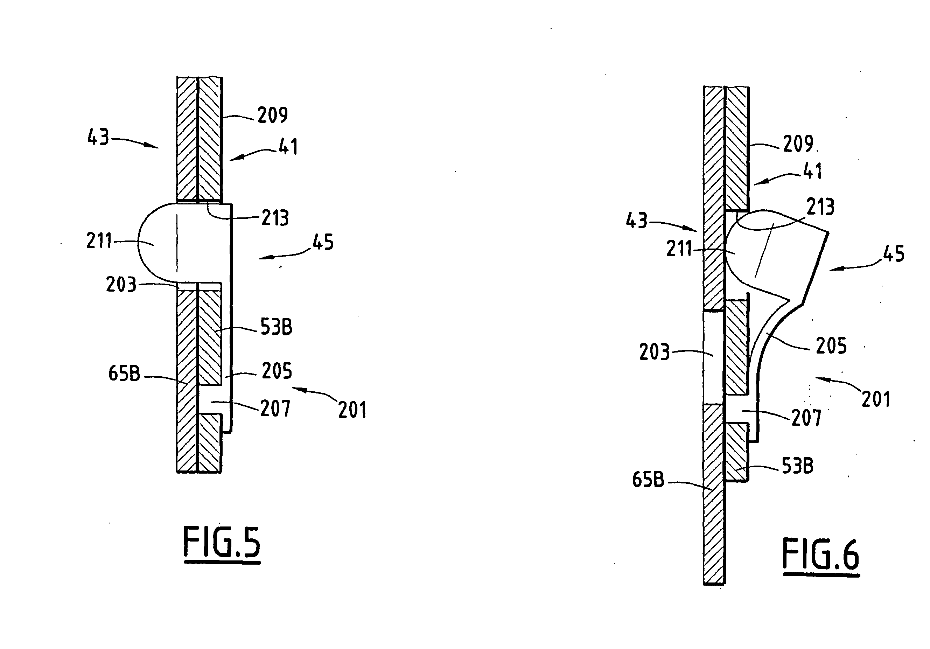

Dans une quatrième variante, illustrée par les Figures 5 et 6, les moyens de retenue 45 comprennent un organe de blocage 201 solidaire de la partie fixe 41, et une lumière de blocage 203, qui est ménagée dans la partie mobile 43 et qui reçoit l'organe de blocage 201 lorsque la partie mobile 43 est en position escamotée.

L'organe de blocage 201 comprend une patte 205 déformable élastiquement dont une extrémité inférieure 207 est fixée sur une face arrière 209 de la partie fixe 41 à l'opposé de la partie mobile 43. Il comprend par ailleurs à son extrémité libre un ergot de blocage 211 engagé dans un passage 213. Le passage 213 est ménagé dans un flanc 53B de la partie fixe 41, dans une partie médiane de ce flanc 53B.

Lorsque la partie mobile 43 est dans sa position escamotée, la lumière de blocage 203 est disposée en regard du passage 213. Dans cette position, l'ergot de blocage 211 est mobile par déformation de la patte 205 entre une position de blocage, dans laquelle il est engagé dans la lumière de blocage 203 (Figure 5) et une position de libération à l'écart de la lumière de blocage 203.

Pour déplacer la partie mobile 43 de sa position escamotée vers sa position déployée, l'opérateur pousse l'ergot de blocage 211 vers la face arrière 209 de la partie mobile 43, de sa position de blocage à sa position de libération, puis déplace la partie mobile 43 vers sa position escamotée, comme décrit précédemment, par coulissement le long de la partie fixe 41.

Lors du déplacement de la partie mobile 43 le long de la partie fixe 41, l'ergot de blocage 211 est en appui sur la joue 65B en regard, comme représenté sur la Figure 6.

En variante, un logement 101 de réception de l'ergot de blocage 211 peut être également prévu dans la partie mobile 43 au-dessus de la lumière de blocage 203.

Lorsque la partie mobile 43 est dans sa position déployée, le logement 101 est disposé en regard du passage 113 et l'ergot de blocage 211 est reçu dans le logement 101 afin de maintenir la partie mobile 43 dans sa position déployée.

Dans une autre variante, l'organe de blocage 201 peut être monté sur la partie mobile 43 et la lumière de blocage 203 peut être ménagée dans la partie fixe 41.

Grâce à l'invention qui vient d'être décrite, il est possible de disposer d'une traverse 11 de véhicule automobile, d'encombrement réduit, grâce à la présence d'une jambe de force 27 qui présente une partie mobile 43 escamotable.

La coopération par frottement entre la partie mobile 43 et la partie fixe 41 de la jambe de force 27 évite l'utilisation d'une goupille de retenue entre ces deux pièces lorsque la partie mobile 43 est escamotée. Le risque de pertes de pièces dans le véhicule, après montage de la traverse 11 est ainsi évité.

Par ailleurs, l'absence de goupille diminue le nombre de pièces à répertorier lors du montage du véhicule et simplifie donc ce montage.

## Revendications

1. Traverse (11) pour véhicule automobile, du type comprenant :
- une poutre (25) ;
- au moins une jambe de force (27), pour relier la poutre (25) au plancher (17) du véhicule, la jambe de force (27) comportant :
• une partie fixe (41) solidaire de la poutre (25) ;
• une partie mobile (43) par rapport à la partie fixe (41) entre une position escamotée et au moins une position déployée de liaison au plancher (17) du véhicule ; et
• des moyens (45) de retenue de la partie mobile (43) dans sa position escamotée ;
**caractérisée en ce que** les moyens de retenue (45) sont intégrés à la jambe de force (27) pour être portés par celle-ci dans la position déployée et **en ce que** la partie mobile (43) est déplaçable depuis sa position escamotée vers sa position déployée par un opérateur de montage.

2. Traverse selon la revendication 1, **caractérisée en ce que** la partie mobile (43) est déplaçable manuellement le long de la partie fixe (41) depuis sa position escamotée vers sa position déployée.

3. Traverse (11) selon l'une des revendications 1 ou 2, **caractérisée en ce que** les moyens de retenue (45) comprennent un organe de blocage (201) sur l'une des partie fixe (41) et partie mobile (43), et une lumière de blocage (203) ménagée dans l'autre des partie fixe (41) et partie mobile (43), l'organe de blocage (201) étant mobile entre une position de blocage, dans laquelle il est engagé dans la lumière de blocage (203) et une position de libération à l'écart de la lumière de blocage (203).

4. Traverse (11) selon l'une des revendications 1 ou 2, **caractérisée en ce que** les moyens de retenue (45) sont des moyens de retenue (45) par frottement de la partie mobile (43) sur la partie fixe (41).

5. Traverse (11) selon la revendication 4, **caractérisée en ce que** les moyens de retenue (45) comprennent au moins une région (83) de frottement sur la partie fixe (41) et au moins une région (81) de frottement sur la partie mobile (43), les régions de frottement (81, 83) coopérant par frottement au moins lorsque la partie mobile (43) se trouve dans sa position escamotée.

6. Traverse (11) selon la revendication 5, **caractérisée en ce que** les régions (81, 83) de frottement coopèrent en outre par frottement au moins lorsque la partie mobile (43) occupe une position intermédiaire entre la position escamotée et la position déployée.

7. Traverse selon l'une des revendications 5 ou 6, **caractérisée en ce que** la partie fixe (41) comprend deux flancs (53A, 53B) qui présentent chacun au moins une région de frottement (83).

8. Traverse (11) selon l'une quelconque des revendications 5 à 7, **caractérisée en ce que** les régions de frottement (81, 83) sont venues de matière respectivement avec la partie fixe (41) et la partie mobile (43).

9. Traverse (11) selon l'une quelconque des revendications 4 à 8, **caractérisée en ce que** les moyens de retenue (45) comprennent au moins une lame (83) en saillie par rapport à l'une des partie fixe (41) et partie mobile (43) et une glissière (81A, 81 B) de réception de la lame (83), ménagée sur l'autre des partie fixe (41) et partie mobile (43).

10. Traverse selon l'une quelconque des revendications précédentes, **caractérisée en ce qu**'elle comprend des moyens (101) de blocage empêchant le déplacement de la partie mobile (43) par rapport à la partie fixe (41) au-delà de la position déployée.

11. Traverse (11) selon les revendication 9 et 10 prises ensemble, **caractérisée en ce que** les moyens de blocage (101) comprennent au moins un logement (101) ménagé dans une paroi de la glissière (81A, 81B), une extrémité (87) de la lame (83) étant reçue dans le logement (101) lorsque la partie mobile (43) est en position déployée.

12. Véhicule automobile, **caractérisé en ce qu**'il comprend une traverse (11) selon l'une des revendications précédentes.

13. Véhicule selon la revendication 12, **caractérisé en ce qu**'il comprend :
- au moins deux montants (15A, 15B) et des premiers moyens (31A, 31 B) de fixation de la poutre (25) aux montants (15A, 15B) ;
- au moins un plancher (17) et des deuxièmes moyens (21, 71) de fixation de la partie mobile (43) au plancher (17).

14. Procédé de montage d'une traverse (11) selon l'une quelconque des revendications 1 à 11 dans la caisse (13) d'un véhicule automobile, **caractérisé en ce qu'**il comprend les étapes suivantes :
- maintien de la partie mobile (43) dans sa position escamotée par les moyens de retenue (45) ;
- introduction et fixation de la poutre (25) dans la caisse (13) ;
- déplacement par coulissement de la partie mobile (43) le long de la partie fixe (41) entre sa position escamotée et sa position déployée ;
- fixation de la partie mobile (43) sur le plancher (17) du véhicule ; et
- solidarisation de la partie fixe (41) et de la partie mobile (43).

## Claims

1. Cross beam (11) for an automotive vehicle, of the type comprising:
- a beam (25);
- at least one strut (27) for connecting the beam (25) to the floor (17) of the vehicle, the strut (27) comprising:
• a fixed part (41) integral with the beam (25);
• a part (43) moveable relative to the fixed part (41) between a retracted position and at least one extended position for connection to the floor (17) of the vehicle; and
• means (45) for retaining the moveable part (43) in its retracted position;
**characterised in that** the retaining means (45) are integrated in the strut (27) in order to be supported by the latter in the extended position and **in that** the moveable part (43) is displaceable from its retracted position towards its extended position by an assembly operator.

2. Cross beam according to claim 1, **characterised in that** the moveable part (43) is displaceable manually along the fixed part (41) from its retracted position towards its extended position.

3. Cross beam (11) according to one of the claims 1 or 2, **characterised in that** the retaining means (45) comprise a locking member (201) on one of the parts, fixed (41) and moveable (43), and a locking slot (203) provided in the other of the parts, fixed (41) and moveable (43), the locking member (201) being moveable between a locking position in which it is engaged in the locking slot (203) and a release position at a spacing from the locking slot (203).

4. Cross beam (11) according to one of the claims 1 or 2, **characterised in that** the retaining means (45) are means for retaining (45) via friction the moveable part (43) on the fixed part (41).

5. Cross beam (11) according to claim 4, **characterised in that** the retaining means (45) comprise at least one frictional region (83) on the fixed part (41) and at least one frictional region (81) on the moveable part (43), the frictional regions (81, 83) cooperating by friction at least when the moveable part (43) is located in its retracted position.

6. Cross beam (11) according to claim 5, **characterised in that** frictional regions (81, 83) cooperate in addition by friction at least when the moveable part (43) adopts an intermediate position between the retracted position and the extended position.

7. Cross beam according to one of the claims 5 or 6, **characterised in that** the fixed part (41) comprises two flanks (53A, 53B) which each have at least one frictional region (83).

8. Cross beam (11) according to any of the claims 5 to 7, **characterised in that** the frictional regions (81, 83) are integral respectively with the fixed part (41) and the moveable part (43).

9. Cross beam (11) according to any of the claims 4 to 8, **characterised in that** the retaining means (45) comprise at least one plate (83) which projects relative to one of the parts, fixed (41) and moveable (43), and a sliding surface (81A, 81B) for receiving the plate (83), provided on the other of the parts, fixed (41) and moveable (43).

10. Cross beam according to any of the preceding claims, **characterised in that** it comprises locking means (101) which prevent displacement of the moveable part (43) relative to the fixed part (41) beyond the extended position.

11. Cross beam (11) according to claims 9 and 10 taken together, **characterised in that** the locking means (101) comprise at least one housing (101) provided in a wall of the sliding surface (81A, 81B), one end (87) of the plate (83) being received in the housing (101) when the moveable part (43) is in the extended position.

12. Automotive vehicle, **characterised in that** it comprises a cross beam (11) according to one of the preceding claims.

13. Vehicle according to claim 12, **characterised in that** it comprises:
- at least two columns (15A, 15B) and first means (31A, 31B) for fixing the beam (25) to the columns (15A, 15B);
- at least one floor (17) and second means (21, 71) for fixing the moveable part (43) to the floor (17) .

14. Method for assembling a cross beam (11) according to any of the claims 1 to 11 in the body (13) of an automotive vehicle, **characterised in that** it comprises the following steps:
- maintaining the moveable part (43) in its retracted position via the retaining means (45);
- introducing and fixing the beam (25) in the body (13);
- displacing the moveable part (43) by sliding along the fixed part (41) between its retracted position and its extended position;
- fixing the moveable part (43) on the floor (17) of the vehicle, and
- interconnecting the fixed part (41) and the moveable part (43).

## Patentansprüche

1. Querträger (11) für Kraftfahrzeug vom Typ enthaltend:
- einen Balken (25);
- zumindest eine Schubstrebe (27), um den Balken (25) mit dem Boden (17) des Fahrzeugs zu verbinden, wobei die Schubstrebe (27) aufweist:
• einen festen Teil (41), der mit dem Balken (25) verbunden ist,
• einen beweglichen Teil (43), der relativ zu dem festen Teil (41) zwischen einer eingezogenen Stellung und zumindest einer ausgezogenen Stellung zur Verbindung mit dem Boden (17) des Fahrzeugs beweglich ist; und
• Mittel (45), um den beweglichen Teil (43) in seiner eingezogenen Stellung zurückzuhalten;
**dadurch gekennzeichnet, dass** die Rückhaltemittel (45) in die Schubstrebe (27) integriert sind, um in der eingezogenen Stellung von dieser getragen zu werden, und dass der bewegliche Teil (43) von einem Montagemitarbeiter von seiner eingezogenen Stellung in seine ausgezogene Stellung verschiebbar ist.

2. Querträger nach Anspruch 1,
**dadurch gekennzeichnet, dass** der bewegliche Teil (43) entlang des festen Teils (41) von seiner eingezogenen Stellung in seine ausgezogene Stellung manuell verschiebbar ist.

3. Querträger (11) nach einem der Ansprüche 1 oder 2,
**dadurch gekennzeichnet, dass** die Rückhaltemittel (45) an einem Teil, dem festen Teil (41) oder dem beweglichen Teil (43), ein Blockierorgan (201) und eine Blockieröffnung (203) aufweisen, die in dem jeweils anderen Teil, dem festen Teil (41) oder dem beweglichen Teil (43), vorgesehen ist, wobei das Blockierorgan (201) zwischen einer blockierten Stellung, bei der es in die Blockieröffnung (203) eingetreten ist, und einer freigesetzten Stellung beweglich ist, bei der es von der Blockieröffnung (203) beabstandet ist.

4. Querträger (11) nach einem der Ansprüche 1 oder 2,
**dadurch gekennzeichnet, dass** die Rückhaltemittel (45) Mittel zum Bewirken des Rückhalts (45) durch Reibung des beweglichen Teils (43) an dem festen Teil (41) sind.

5. Querträger (11) nach Anspruch 4,
**dadurch gekennzeichnet, dass** die Rückhaltemittel (45) zumindest einen Reibungsbereich (83) an dem festen Teil (41) und zumindest einen Reibungsbereich (81) an dem beweglichen Teil (43) aufweisen, wobei die Reibungsbereiche (81, 83) zumindest dann durch Reibung zusammenwirken, wenn sich der bewegliche Teil (43) in seiner eingezogenen Stellung befindet.

6. Querträger (11) nach Anspruch 5,
**dadurch gekennzeichnet, dass** die Reibungsbereiche (81, 83) ferner zumindest dann durch Reibung zusammenwirken, wenn der bewegliche Teil (43) eine Zwischenstellung zwischen der eingezogenen Stellung und der ausgezogenen Stellung einnimmt.

7. Querträger nach einem der Ansprüche 5 oder 6,
**dadurch gekennzeichnet, dass** der feste Teil (41) zwei Flanken (53A, 53B) aufweist, die jeweils zumindest einen Reibungsbereich (83) darstellen.

8. Querträger (11) nach einem der Ansprüche 5 bis 7,
**dadurch gekennzeichnet, dass** die Reibungsbereiche (81, 83) einstückig mit dem festen Teil (41) bzw. mit dem beweglichen Teil (43) gebildet sind.

9. Querträger (11) nach einem der Ansprüche 4 bis 8,
**dadurch gekennzeichnet, dass** die Rückhaltemittel (45) zumindest eine Zunge (83), die von einem der Teile, dem festen Teil (41) oder dem beweglichen Teil (43), vorspringt, und eine Gleitführung (81A, 81B) für die Aufnahme der Zunge (83) aufweisen, die an dem jeweils anderen Teil, dem festen Teil (41) oder dem beweglichen Teil (43), vorgesehen ist.

10. Querträger nach einem der vorstehenden Ansprüche,
**dadurch gekennzeichnet, dass** er Blockiermittel aufweist (101), welche die Verschiebung des beweglichen Teils (43) relativ zu dem festen Teil (41) über die ausgezogene Stellung hinaus verhindern.

11. Querträger (11) nach den Ansprüchen 9 und 10 zusammen,
**dadurch gekennzeichnet, dass** die Blockiermittel (101) zumindest eine Aufnahme (101) aufweisen, die in einer Wand der Gleitführung (81A, 81B) vorgesehen ist, wobei ein Ende (87) der Zunge (83) in dieser Aufnahme (101) aufgenommen wird, wenn sich der bewegliche Teil (43) in ausgezogener Stellung befindet.

12. Kraftfahrzeug,
**dadurch gekennzeichnet, dass** es einen Querträger (11) nach einem der vorstehenden Ansprüche aufweist.

13. Fahrzeug nach Anspruch 12,
**dadurch gekennzeichnet, dass** es aufweist:
- zumindest zwei Holme (15A, 15B) und erste Mittel (31A, 31 B) für die Befestigung des Balkens (25) an den Holmen (15A, 15B) ;
- zumindest einen Boden (17) und zweite Mittel (21, 71) für die Befestigung des beweglichen Teils (43) an dem Boden (17).

14. Verfahren zur Montage eines Querträgers (11) nach einem der Ansprüche 1 bis 11 in der Karosserie (13) eines Kraftfahrzeugs,
**dadurch gekennzeichnet, dass** es die folgenden Schritte umfasst:
- Festhalten des beweglichen Teils (43) in seiner eingezogenen Stellung mit Hilfe der Rückhaltemittel (45);
- Einführung und Befestigung des Balkens (25) in der Karosserie (13);
- Verschiebung des beweglichen Teils (43) entlang des festen Teils (41) zwischen seiner eingezogenen Stellung und seiner ausgezogenen Stellung;
- Befestigung des beweglichen Teils (43) an dem Boden (17) des Fahrzeugs; und
- Verbindung des festen Teils (41) und des beweglichen Teils (43).
